# DEMANDE DE BREVET EUROPEEN

(11) **EP 3 636 122 A1**
(43) Date de publication de la demande: **15.04.2020**
(21) Numéro de dépôt: 19200025.5
(22) Date de dépôt: 27.09.2019
(51) Int. Cl.: A47J 43/07, A01N 1/02, A47J 19/02

(54) **DISPOSITIF D'INTRODUCTION D'ALIMENTS SÉCURISÉ ET APPAREIL DE PRÉPARATION CULINAIRE COMPORTANT UN TEL DISPOSITIF**

(30) Priorité: 12.10.2018 FR 1859496
(71) Demandeur: SEB S.A., 69130 Ecully (FR)
(72) Inventeur: RAGOT, Didier, 72100 LE MANS (FR); BOUFFAY, Alain, 14200 HEROUVILLE SAINT CLAIR (FR)
(74) Mandataire: Bourrières, Patrice

(57) **Abrégé**

L'invention concerne un dispositif d'introduction d'aliments (1) pour appareil (100) de préparation culinaire, ledit appareil (100) comprenant une enceinte (105) dans laquelle est logé un outil (102). Le dispositif d'introduction d'aliments (1) comprend une goulotte (4) comportant une ouverture (7) d'introduction des aliments et un conduit (10) d'acheminement des aliments de l'ouverture (7) jusqu'à l'enceinte (105). Le dispositif d'introduction d'aliments (1) comprend un premier clapet (12) pivotant selon un premier axe de pivotement entre une position d'obturation de l'ouverture (7) et une position de libération de l'ouverture (7) et un second clapet (13) pivotant selon un second axe de pivotement entre une position de libération du conduit (10) et une seconde position d'obturation du conduit (10). Le dispositif d'introduction d'aliments (1) comprend un dispositif de transmission différentiel (14b) agencé entre les clapets (12, 13) pour amplifier le pivotement du second clapet (13) lors du pivotement du premier clapet (12). L'invention concerne également un appareil (100) équipé d'un tel dispositif d'introduction d'aliments (1), par exemple un extracteur de jus.

## Description

### Domaine technique

La présente invention concerne les appareils de préparation culinaire qui comprennent un outil rotatif agencé dans une enceinte de travail et un dispositif d'introduction d'aliments muni d'une goulotte d'acheminement des aliments jusqu'à l'enceinte de travail.

L'invention porte tout particulièrement sur le dispositif d'introduction d'aliments d'un tel appareil, lequel comporte un système de sécurité empêchant l'accès avec les mains à l'outil rotatif en passant par la goulotte d'acheminement.

Une mise en oeuvre particulière d'un tel appareil concerne un pressoir pour la préparation de jus de fruits et/ou légumes.

### Etat de la technique

Les appareils de préparation culinaire du type pressoir sont bien connus. Un tel appareil comprend un corps définissant une enceinte de travail et un dispositif d'introduction d'aliments muni d'une goulotte d'introduction d'aliments. Un outil rotatif, du type vis de pressage, est logé dans l'enceinte de travail. La goulotte comprend une ouverture d'introduction des aliments et un conduit d'acheminement des aliments jusqu'à l'enceinte de travail. L'ouverture et le conduit sont dimensionnés pour permettre l'insertion de fruits et/ou légumes entiers ou coupés en gros morceaux.

Afin d'éviter que l'utilisateur insert une de ses mains dans le conduit, par exemple pour pousser les aliments, le dispositif d'introduction d'aliments sur un tel appareil est équipé d'un système de sécurité qui comporte deux clapets. Le premier clapet est monté à pivotement entre une première position d'obturation de l'ouverture et une seconde position de libération de l'ouverture. De même, le second clapet est monté à pivotement entre une première position de libération du conduit et une seconde position d'obturation du conduit. Le second clapet se situe dans la première position lorsque le premier clapet se situe dans la première position, de même avec les secondes positions.

On citera par exemple les documents suivants présentant les caractéristiques précitées: EP2810567B1 ; CN106805727A; CN204520245U ; CN204734315U ; CN205214941U; KR20150130799A.

Dans le brevet européen EP2810567B1, les deux clapets sont formés d'une seule et même pièce montée à pivotement selon un axe, les deux clapets étant plus ou moins disposés en équerre l'un vis-à-vis de l'autre.

Dans la demande de brevet chinois CN106805727A et dans le modèle d'utilité chinois CN205214941U, les deux clapets sont formés d'une seule et même pièce montée à pivotement selon un axe, les deux clapets étant disposés dans un même plan en opposition, un dispositif de transmission par engrenage permettant de faire pivoter ladite pièce.

Dans les modèles d'utilité chinois CN204520245U et CN204734315U et dans la demande de brevet coréen KR20150130799A, les deux clapets sont constitués de deux pièces distinctes montées à pivotement selon deux axes respectifs. En outre, un dispositif de transmission permet de déplacer simultanément les deux clapets de leurs premières positions vers leurs secondes positions, et inversement, en pivotant lesdits clapets d'un angle de 90° entre l'horizontale et la verticale.

Dans la demande de brevet coréen KR20150130799A, le dispositif de transmission comprend une pièce de transmission activée en va-et-vient verticalement, la pièce de transmission comprenant deux doigts formant des cames qui appuient respectivement sur les extrémités pivotantes des deux clapets. Lorsque la pièce de transmission monte, le premier clapet pivote à l'horizontale et le second clapet pivote simultanément à la verticale ; inversement, lorsque la pièce de transmission descend.

Dans le modèle d'utilité chinois CN204520245U, le dispositif de transmission comprend une bielle verticale dont les extrémités sont montées pivotantes vis-à-vis de deux bras assujettis respectivement aux deux clapets. Le pivotement du premier clapet de l'horizontale à la verticale entraîne simultanément le pivotement du second clapet de la verticale à l'horizontale par l'intermédiaire de la bielle.

Dans le modèle d'utilité chinois CN204734315U, le dispositif de transmission comprend une pièce de butée assujettie à l'extrémité pivotante du premier clapet et prenant appui en-dessous de l'extrémité pivotante du second clapet, sur une face externe dudit second clapet. Le pivotement du premier clapet de l'horizontal à la verticale permet à la pièce de butée d'entraîner simultanément le pivotement du second clapet de la verticale à l'horizontale ; le pivotement du premier clapet de la verticale à l'horizontale assure le dégagement de la pièce de butée vis-à-vis de la face externe du second clapet, ce qui permet audit second clapet de pivoter de l'horizontale à la verticale uniquement sous l'effet de la gravité et des fruits et légumes appuyant sur ce second clapet.

### Résumé de l'invention

La présente invention met en oeuvre une alternative de conception qui présente pour avantage de faciliter la descente des aliments dans le conduit d'acheminement des aliments jusqu'à l'enceinte de travail, lors du déplacement du premier clapet vers sa première position d'obturation de l'ouverture d'introduction desdits aliments.

A cet effet, l'invention porte sur un dispositif d'introduction d'aliments pour un appareil de préparation culinaire. L'appareil comprend une enceinte de travail dans laquelle est logé un outil rotatif, par exemple une vis de pressage permettant d'extraire du jus des aliments, ou des couteaux rotatifs permettant de broyer des aliments. Le dispositif d'introduction d'aliments selon l'invention comprend une goulotte d'introduction des aliments dans l'enceinte de travail. Cette goulotte comprend une première ouverture permettant d'introduire les aliments et un premier conduit débouchant à une première extrémité sur la première ouverture et à une seconde extrémité sur l'enceinte de travail, pour acheminer lesdits aliments de la première ouverture jusqu'à l'enceinte de travail.

En outre, le dispositif d'introduction d'aliments comprend deux clapets. Le premier clapet est monté à pivotement selon un premier axe de pivotement entre une première position d'obturation de la première ouverture et une seconde position de libération de la première ouverture. De même, le second clapet est monté à pivotement selon un second axe de pivotement entre une première position de libération du premier conduit et une seconde position d'obturation au moins partielle du premier conduit. On entend par obturation « au moins partielle », le fait que le second clapet peut comporter une encoche, comme cela sera décrit ci-après.

De manière remarquable, le dispositif d'introduction d'aliments comprend au moins un dispositif de transmission agencé entre le premier clapet et le second clapet et configuré pour que le pivotement du premier clapet de sa première position vers sa seconde position, et inversement, entraîne le pivotement du second clapet de sa première position vers sa seconde position, et inversement, avec un différentiel de mouvement permettant d'amplifier le pivotement du second clapet sous l'effet du pivotement du premier clapet. En d'autres termes, le dispositif de transmission comporte une transmission différentielle permettant d'amplifier le pivotement du second clapet sous l'effet du pivotement du premier clapet. Ainsi, le dispositif de transmission assure un dégagement total et plus rapide du second clapet pour libérer le premier conduit, lors de la fermeture de la première ouverture par le premier clapet ; cela permet aux aliments de descendre plus rapidement vers l'enceinte de travail en réduisant les risques de blocage des aliments dans le premier conduit, avant même l'obturation totale de la première ouverture par le premier clapet. Une descente plus rapide des aliments dans l'enceinte de travail permet en outre d'optimiser la durée de traitement - pressage ou hachage, par exemple - des aliments dans l'enceinte de travail avant l'introduction d'autres aliments.

Selon une mise en oeuvre du dispositif d'introduction d'aliments, le dispositif de transmission comprend au moins un premier secteur de roue dentée monté rotatif selon le premier axe de pivotement et assujetti au premier clapet, un pignon intermédiaire monté rotatif selon un troisième axe et au moins un second secteur de roue dentée monté rotatif selon le second axe de pivotement et assujetti au second clapet. Le pignon intermédiaire engrène avec le premier secteur de roue dentée et avec le second secteur de roue dentée. Il est possible de remplacer le premier secteur de roue dentée par une première roue dentée complète. De même, il est possible de remplacer le second secteur de roue dentée par une seconde roue dentée complète. Le premier secteur de roue dentée, voire la première roue dentée, présente un rayon supérieur à celui du second secteur de roue dentée, voire de la seconde roue dentée. Cela permet d'obtenir un rapport de transmission supérieur à un entre le mouvement angulaire du second clapet (qui est mené) et le mouvement angulaire du premier clapet (qui est menant, c'est-à-dire qui peut être manoeuvré directement par l'utilisateur). En d'autres termes, une rotation du premier clapet d'un premier angle donné entraîne une rotation du deuxième clapet d'un deuxième angle donné supérieur au premier angle donné, le rapport du premier angle donné sur le premier angle donné donnant le rapport de transmission. On pourrait aussi prévoir un nombre impair de pignons intermédiaires engrenant les uns avec les autres et disposés entre le premier secteur de roue dentée et le second secteur de roue dentée, ledit nombre impair étant supérieur à un.

Selon une mise en oeuvre du dispositif d'introduction d'aliments, le dispositif de transmission comprend un mécanisme ralentisseur permettant de freiner le pivotement du premier clapet et du second clapet. Cela permet d'éviter un déplacement trop brutal des deux clapets pouvant occasionner des chocs en fin de course desdits clapets. De préférence, le mécanisme ralentisseur est un ralentisseur à graisse agencé sur le pignon intermédiaire.

Selon une mise en oeuvre du dispositif d'introduction d'aliments, le premier clapet pivote d'un angle de l'ordre de 90° entre sa première position et sa seconde position et le second clapet pivote d'un angle de l'ordre de 120° entre sa première position et sa seconde position.

Selon une mise en oeuvre du dispositif d'introduction d'aliments, la première ouverture et le premier conduit sont dimensionnés pour que le second clapet libère un passage du premier conduit d'une section correspondant à au moins 90% de la section de la première ouverture, de préférence 100%, lorsque le premier clapet obture ladite première ouverture. Cela permet d'assurer une descente convenable des aliments dans le premier conduit.

Selon une mise en oeuvre du dispositif d'introduction d'aliments, la goulotte d'introduction comprend une seconde ouverture de plus petite dimension que la première ouverture et un second conduit rectiligne, de préférence à l'aplomb, débouchant à une première extrémité sur la seconde ouverture et à une seconde extrémité à proximité de la seconde extrémité du premier conduit. Le second clapet obture au moins partiellement le second conduit, dans sa première position, et libère le second conduit, dans sa seconde position. De préférence, le second clapet comporte une encoche permettant l'insertion d'un poussoir au travers dudit second clapet dans sa première position, en insérant ledit poussoir par la seconde ouverture. Cela aide à introduire les aliments dans l'enceinte de travail, en cas de bourrage de ces aliments dans le premier conduit.

Selon l'invention, le dispositif d'introduction d'aliments comprend un corps incorporant le premier conduit et un capot fermant une extrémité supérieure dudit corps, le capot comportant la première ouverture. Selon une réalisation, le corps incorpore le second conduit et le capot comporte la seconde ouverture. Selon une réalisation, le premier clapet, le second clapet et l'au moins un dispositif de transmission sont portés par le corps, au niveau de sa jonction avec le capot, ledit capot permettant de maintenir montés à pivotement le premier clapet et le second clapet sur ledit corps.

Selon l'invention, le dispositif d'introduction d'aliments comprend un dispositif de maintien du premier clapet dans sa première position. Selon une réalisation, le dispositif d'introduction d'aliments comprend un dispositif de rappel du premier clapet dans sa seconde position, lorsque le dispositif de maintien est désactivé, pour assurer une libération automatique de la première ouverture lorsque l'utilisateur désactive ledit dispositif de maintien. Selon l'invention, le dispositif d'introduction d'aliments comprend un dispositif de butée limitant le pivotement du premier clapet dans sa seconde position, pour arrêter précisément le premier clapet et le second clapet dans leurs secondes positions.

L'invention concerne également un appareil de préparation culinaire comprenant un réceptacle, un outil rotatif agencé dans le réceptacle et un dispositif d'introduction d'aliments comportant un couvercle prévu pour fermer le réceptacle, dans lequel le dispositif d'introduction d'aliments présente l'une et/ou l'autre des caractéristiques précitées. Selon une forme de réalisation préférée, un mécanisme d'assemblage à baïonnette est agencé entre le réceptacle et le dispositif d'introduction d'aliments, la mise en place dudit dispositif d'introduction d'aliments sur le réceptacle permettant de définir l'enceinte de travail dans laquelle est logé l'outil rotatif.

Selon une réalisation, l'appareil de préparation culinaire est un pressoir, également appelé extracteur de jus, l'outil rotatif étant une vis de pressage permettant d'extraire du jus des aliments, notamment des fruits et/ou légumes. La vis de pressage est agencée dans un filtre logé dans le réceptacle.

On pourrait envisager d'autres appareils de préparation culinaire dans le cadre de l'invention, par exemple un appareil pour broyer les aliments, l'outil rotatif étant alors constitué de couteaux rotatifs.

### Brève description des figures

La description suivante met en évidence les caractéristiques et avantages de la présente invention. Cette description s'appuie sur des figures, parmi lesquelles :
- La figure 1 illustre une vue d'ensemble d'un mode de réalisation du dispositif d'introduction d'aliments selon l'invention, dans une configuration d'attente avec les deux clapets occupant leurs premières positions respectives ;
- Les figures 2 et 3 illustrent des vues en coupe de côté du mode de réalisation du dispositif d'introduction d'aliments illustré sur la figure 1, dans la configuration d'attente avec les deux clapets occupant leurs premières positions respectives, et dans une configuration d'introduction avec les deux clapets occupant leurs secondes positions respectives ;
- Les figures 4 et 5 illustrent selon deux angles de vue, les deux clapets et deux dispositifs de transmission entre lesdits clapets du mode de réalisation du dispositif d'introduction d'aliments illustré sur les figures 1 et 2 ;
- Les figures 6 à 10 mettent en évidence les conceptions des deux clapets et des dispositifs de transmission des figures 4 et 5 ;
- Les figures 11 à 13 permettent de préciser, à l'appui de la description, l'agencement des deux clapets et des dispositifs de transmission des figures 4 à 10, entre une partie supérieure d'un corps et un capot dudit dispositif d'introduction d'aliments selon l'invention ;
- La figure 14 illustre un appareil de type extracteur de jus, incorporant ledit dispositif d'introduction d'aliments.

### Description détaillée

Dans la suite de la description, le terme appareil est utilisé pour désigner un appareil de préparation culinaire comportant un dispositif d'introduction d'aliments selon l'invention, sans indication contraire.

Dans la suite de la description, les termes « horizontal », « vertical », « inférieur », « supérieur », « longitudinal », « transversal », « haut », « bas », qui pourraient être employés, le seront en considération de la position de l'appareil reposant sur un plan de travail, en situation d'usage, avec le dispositif d'introduction d'aliments en place sur ledit appareil.

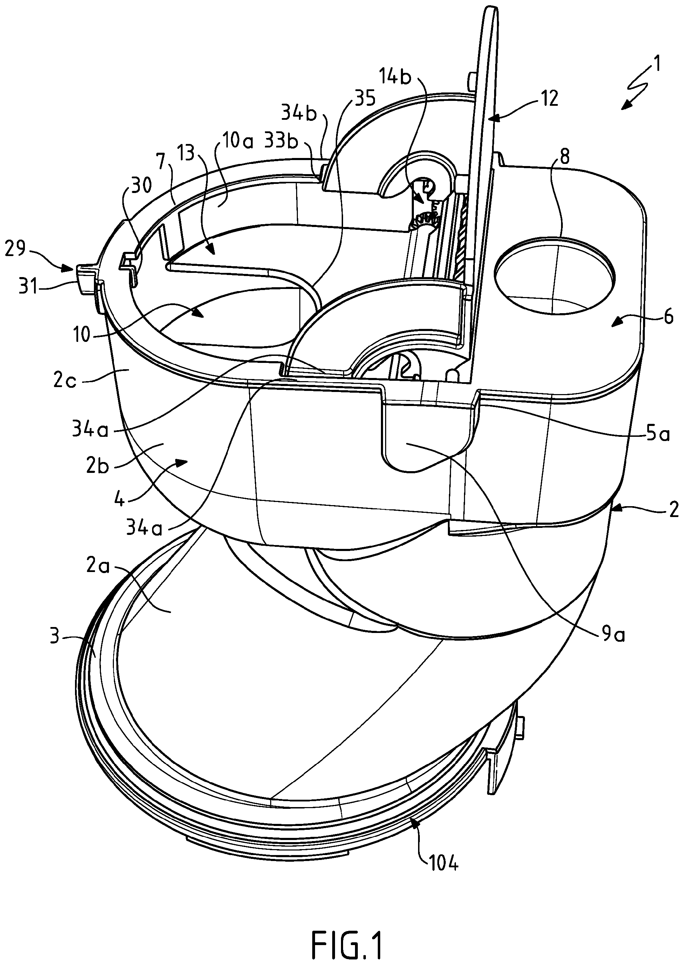

En regard de la figure 1, le dispositif d'introduction d'aliments 1 comprend un corps 2 comportant un tronçon inférieur 2a et un tronçon supérieur 2b. Le dispositif d'introduction d'aliments 1 comprend un couvercle 3 prévu pour fermer un réceptacle. Le tronçon inférieur 2a est issu du couvercle 3. Le tronçon supérieur 2b définit une goulotte 4 pour l'introduction des aliments. La goulotte 4 communique avec une face inférieure du couvercle 3.

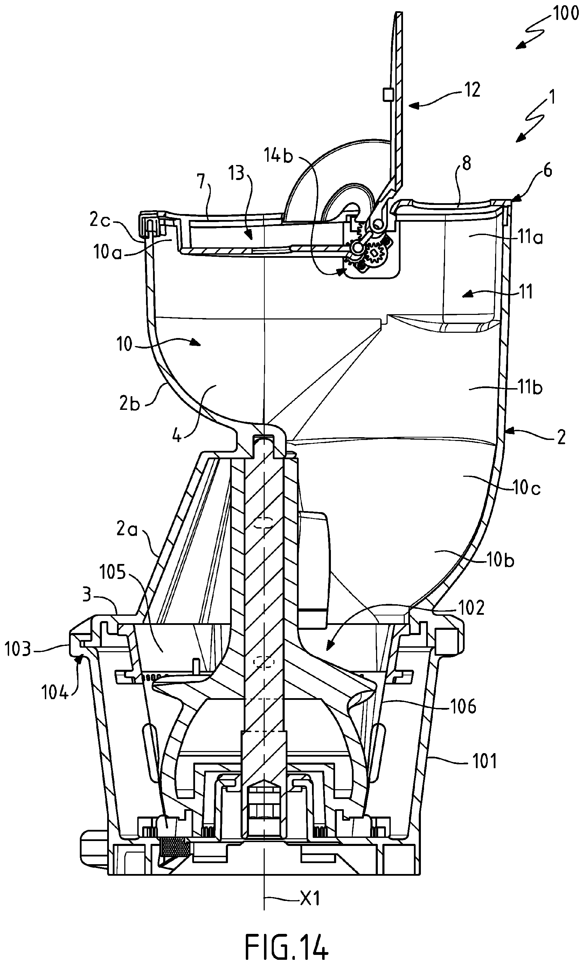

En regard de la figure 14, le dispositif d'introduction d'aliments 1 constitue une pièce d'un appareil 100 qui comporte un réceptacle 101 et un outil rotatif 102 tournant selon un axe de rotation vertical X1. Sur cette figure 14, l'appareil 100 est un extracteur de jus, également appelé pressoir, l'outil rotatif 102 étant une vis de pressage agencée dans un filtre 106 logé dans le réceptacle 101. Le couvercle 3 se fixe sur une partie supérieure 103 du réceptacle 101 grâce à un mécanisme d'assemblage à baïonnette 104. La fixation du couvercle 3 sur le réceptacle 101, au-dessus de l'outil rotatif 102, permet de constituer une enceinte de travail 105 incorporant ledit outil rotatif 102.

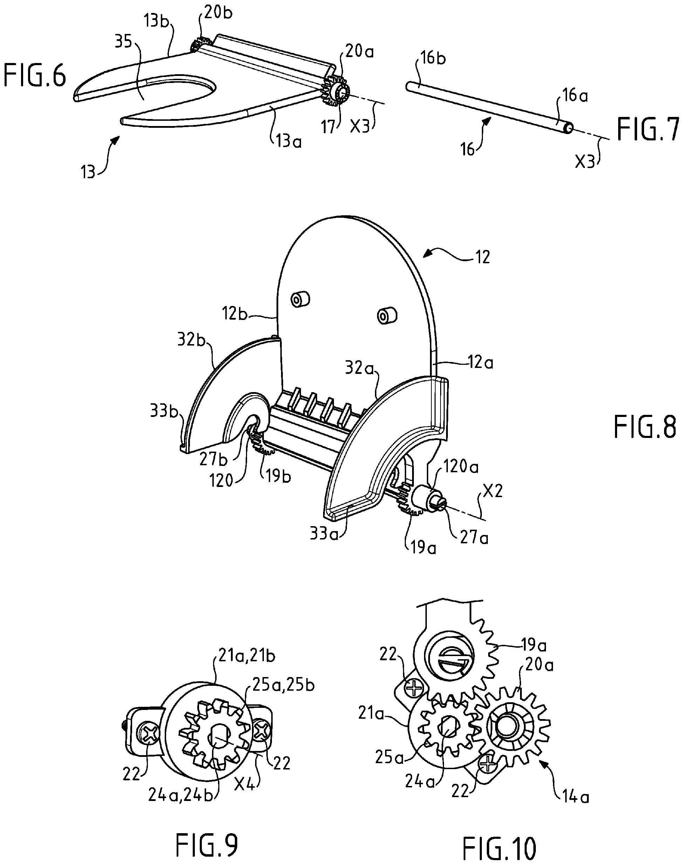

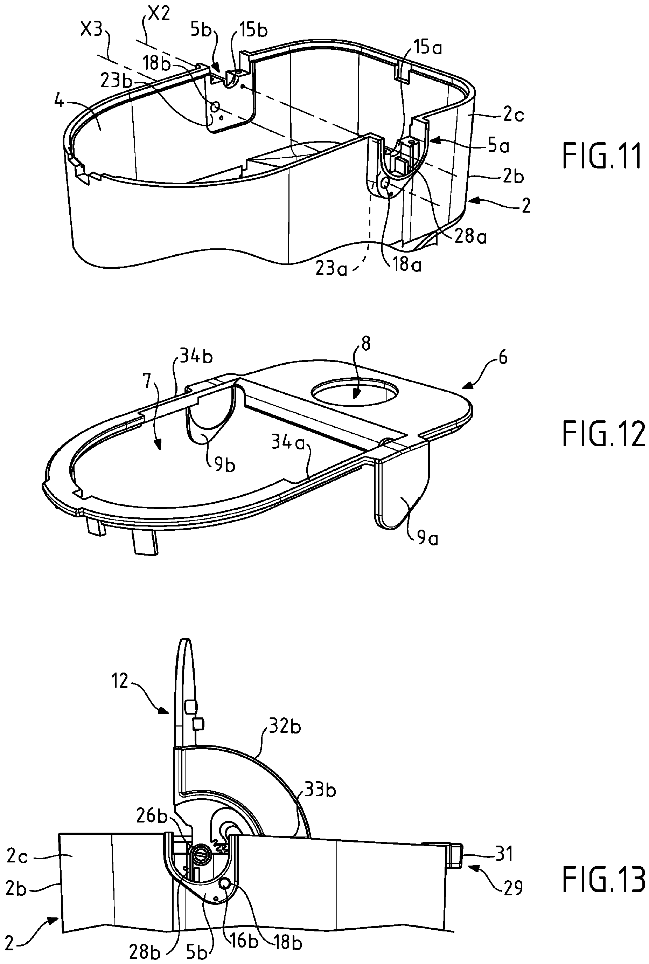

En regard des figures 1, 10 et 11, l'extrémité supérieure 2c du corps 2 ménage une ouverture supérieure. En d'autres termes, le corps 2 est débouchant à son extrémité supérieure 2c. Deux oreilles 5a, 5b latérales sont agencées à l'extérieur de l'extrémité supérieure 2c du corps 2. Le dispositif d'introduction d'aliments 1 comprend également un capot 6 qui comporte une première ouverture 7, une seconde ouverture 8 et deux flasques 9a, 9b latérales. La seconde ouverture 8 est de plus petite dimension que la première ouverture 7. Lorsque le capot 6 est emboîté sur l'extrémité supérieure 2c du corps 2, les deux flasques 9a, 9b se positionnent respectivement sur les deux oreilles 5a, 5b avec lesquelles ils coopèrent.

En regard des figures 1 à 3 et 14, la goulotte 4 comporte la première ouverture 7 et la seconde ouverture 8, une fois le capot 6 emboîté sur le corps 2. Cette goulotte 4 comprend également un premier conduit 10 et un second conduit 11. Le premier conduit 10 présente une première extrémité supérieure 10a et une première extrémité inférieure 10b. Le premier conduit 10 débouche à la première extrémité supérieure 10a sur la première ouverture 7. Lorsque le dispositif d'introduction d'aliments 1 est en place sur le réceptacle 101 de l'appareil 100, le premier conduit 10 débouche à la première extrémité inférieure 10b sur l'enceinte de travail 105. Le second conduit 11 présente une seconde extrémité supérieure 11a et une seconde extrémité inférieure 11b. Le second conduit 11 débouche à la seconde extrémité supérieure 11a sur la seconde ouverture 8 et à la seconde extrémité inférieure 11b sur le premier conduit 10, au niveau d'une partie coudée 10c du premier conduit 10 débouchant dans l'enceinte de travail 105.

En regard des figures 1 à 14, le dispositif d'introduction d'aliments 1 comprend un premier clapet 12, un second clapet 13 et deux dispositifs de transmission 14a, 14b qui sont agencés entre les côtés latéraux 12a, 12b du premier clapet 12 et les côtés latéraux 13a, 13b du second clapet 13. Le premier clapet 12 comprend deux extrémités axiales 120a, 120b qui viennent se loger dans deux paliers 15a, 15b agencés respectivement sur les oreilles 5a, 5b disposées à l'extrémité supérieure 2c du corps 2, la mise en place des flasques 9a, 9b du capot 6 sur lesdites oreilles 5a, 5b assurant le maintien desdites extrémités axiales 120a, 120b logées dans les paliers 15a, 15b. Cela permet le montage en liaison pivot du premier clapet 12 sur le corps 2 selon un premier axe de pivotement X2. Le second clapet 13 comprend un axe de clapet 16 amovible qui vient se loger dans un premier trou 17 débouchant agencé transversalement sur ce second clapet 13. Le montage du second clapet 13 entre les deux oreilles 5a, 5b s'effectue en passant ledit axe de clapet 16 au travers d'un de deux seconds trous 18a, 18b débouchant agencés respectivement sur ces deux oreilles 5a, 5b, jusqu'à ce que les deux extrémités 16a, 16b de l'axe de clapet 16 soit respectivement logées dans ces deux seconds trous 18a, 18b, la mise en place desdits flasques 9a, 9b sur lesdites oreilles 5a, 5b assurant le maintien dudit axe de clapet 16 sur le corps 2. Cela permet le montage en liaison pivot du second clapet 13 sur le corps 2 selon un second axe de pivotement X3. Le premier axe de pivotement X2 et le second axe de pivotement X3 sont distincts. De préférence, le premier axe de pivotement X2 et le second axe de pivotement X3 sont parallèles.

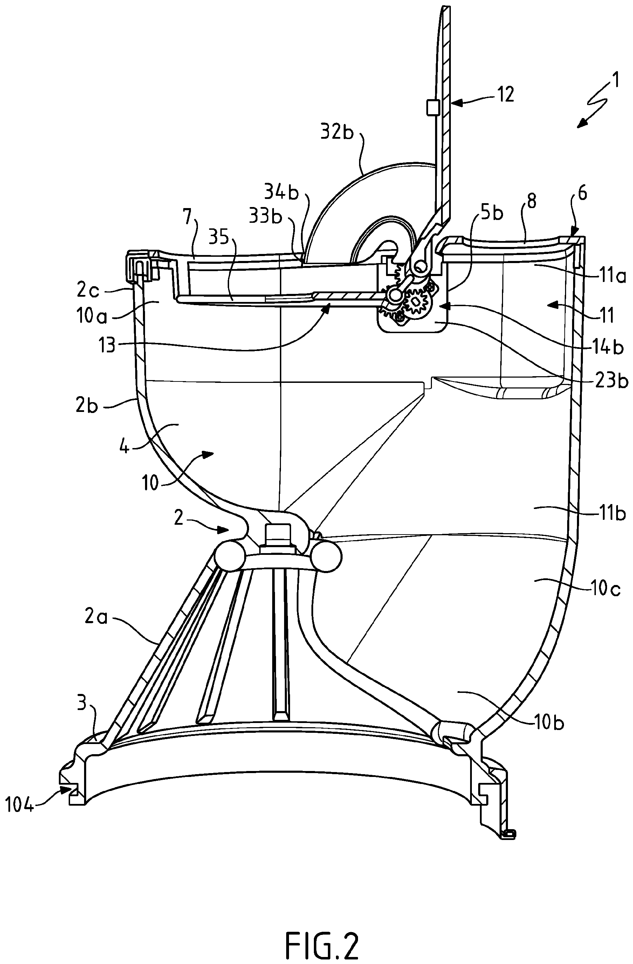

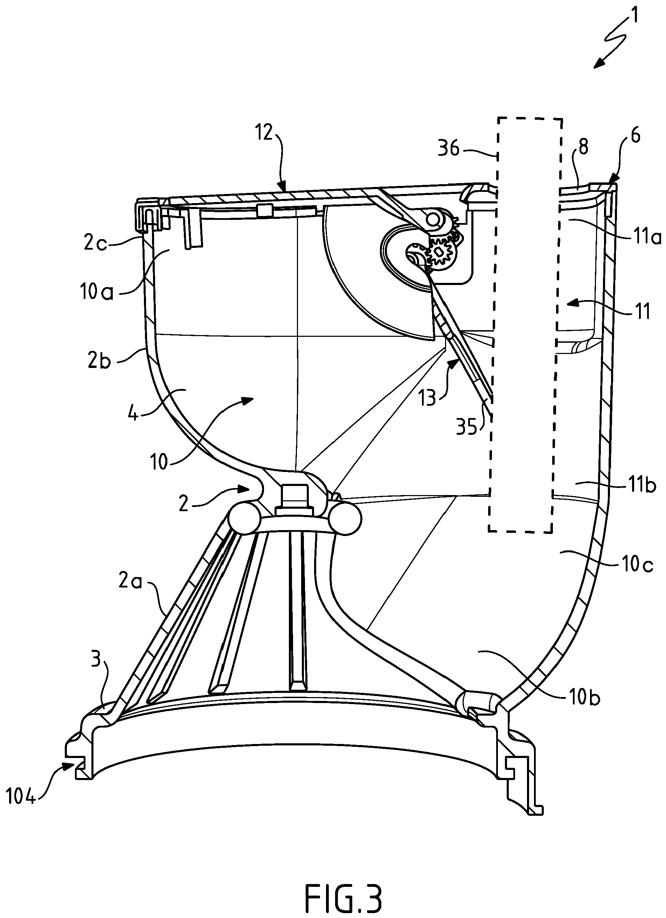

Comme l'illustrent les figures 2 et 3, le premier clapet 12 peut pivoter dans une première position d'obturation de la première ouverture 7 et dans une seconde position de libération de cette première ouverture 7 et, le second clapet 13 peut pivoter dans une première position de libération du premier conduit 10 et dans une seconde position d'obturation de la première extrémité supérieure 10a du premier conduit 10. Lorsque le premier clapet 12 est dans sa première position, le second clapet 13 est aussi dans sa première position ; de même avec les secondes positions du premier clapet 12 et du second clapet 13. Lorsque le premier clapet 12 et le second clapet 13 sont dans leur premières positions, le second clapet 13 libère un passage du premier conduit 10 d'une section correspondant à au moins 90% de la section de la première ouverture 7, de préférence 100%, pour faciliter la descente des aliments dans la goulotte 4.

En regard des figures 2 à 11, deux premiers secteurs de roue dentée 19a, 19b sont assujettis respectivement aux extrémités axiales 120a, 120b du premier clapet 12, selon le premier axe de pivotement X2. De même, deux seconds secteurs de roue dentée 20a, 20b sont assujettis respectivement aux côtés latéraux 13a, 13b du second clapet 13, selon le second axe de pivotement X3. Tel que représenté sur les figures, les deux seconds secteurs de roue dentée 20a, 20b appartiennent à des roues dentées. Deux ralentisseurs à graisse 21a, 21b sont fixés par des vis de fixation 22 sur les parois internes latérales 23a, 23b des deux oreilles 5a, 5b ; ces ralentisseurs à graisse 21a, 21b comportent chacun un axe de ralentisseur à graisse 24a, 24b, les deux axes de ralentisseur à graisse 24a, 24b tournant selon un troisième axe de rotation X4 parallèle aux deux axes de pivotement X2, X3. Ces deux axes de ralentisseur à graisse 24a, 24b sont entraînés en rotation respectivement par deux pignons intermédiaires 25a, 25b appartenant respectivement aux deux dispositifs de transmission 14a, 14b. Sur chacun des dispositifs de transmission 14a, 14b, le pignon intermédiaire 25a, 25b engrène avec le premier secteur de roue dentée 19a, 19b et avec le second secteur de roue dentée 20a, 20b. Ainsi, le pivotement du premier clapet 12 engendre le pivotement du second clapet 13 par l'intermédiaire des dispositifs de transmission 14a, 14b.

Le rayon du premier secteur de roue dentée 19a, 19b est supérieur au rayon du second secteur de roue dentée 20a, 20b, ce qui permet la mise en oeuvre d'une transmission différentielle entre le premier clapet 12 et le second clapet 13. Ainsi le pivotement du premier clapet 12 entraine le pivotement du second clapet 13, et le pivotement du second clapet 13 est amplifié par rapport au pivotement du premier clapet 12. En d'autres termes, si le clapet 12 pivote d'un premier angle donné, le second clapet 13 pivote d'un second angle supérieur au premier angle. Comme l'illustrent les figures 2 et 3, ces rayons du premier secteur de roue dentée 19a, 19b et du second secteur de roue dentée 20a, 20b sont choisis d'une part pour que lorsque le premier clapet 12 libère la première ouverture 7 et se situe dans une position plus ou moins verticale, le second clapet 13 obture la première extrémité supérieure 10a du premier conduit 10 et se situe dans une position plus ou moins horizontale, et d'autre part que, lorsque le premier clapet 12 obture la première ouverture 7 et se situe dans une position plus ou moins horizontale, le second clapet 13 libère le premier conduit 10 et forme un angle de plus ou moins 120° avec ledit premier clapet 12, ledit second clapet 13 étant alors positionné dans le passage du second conduit 11. En d'autres termes, tandis que le premier clapet 12 pivote d'un angle de l'ordre de 90° entre sa première position et sa seconde position, et inversement, le second clapet 13 pivote d'un angle de l'ordre de 120° entre sa première position et sa seconde position, et inversement. Ainsi le rapport d'amplification entre le pivotement du premier clapet 12 et le pivotement du second clapet 13 est de l'ordre de 33%. On pourrait remplacer les premiers secteurs de roue dentée 19a, 19b sur le premier clapet 12 par des roues dentées. De même, on pourrait remplacer les seconds secteurs de roue dentée 20a, 20b sur le second clapet 13 par des secteurs de roue dentée adaptés pour permettre le pivotement dudit second clapet 13 sur un angle préférentiel de 120°. On pourrait également prévoir un autre rapport d'amplification entre le pivotement du premier clapet 12 et le pivotement du second clapet 13. De préférence, le rapport d'amplification entre le pivotement du premier clapet 12 et le pivotement du second clapet 13 est supérieur ou égal à 10%. De préférence, le rapport d'amplification entre le pivotement du premier clapet 12 et le pivotement du second clapet 13 est inférieur ou égal à 100%. Selon une réalisation préférée, le rapport d'amplification entre le pivotement du premier clapet 12 et le pivotement du second clapet 13 est compris entre 25% et 50%.

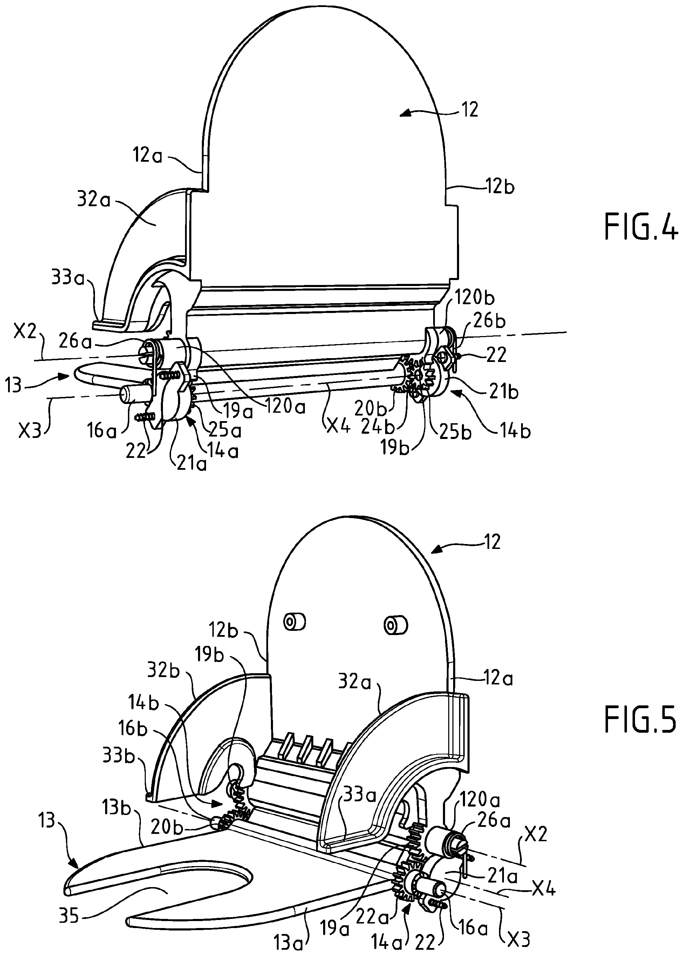

En regard des figures 4, 5, 8, 11 et 13, deux ressorts à spirale 26a, 26b sont agencés entre les extrémités axiales 120a, 120b du premier clapet 12 et les deux oreilles 5a, 5b, ces ressorts à spirale 26a, 26b étant maintenus grâce à la présence de premières fentes 27a, 27b sur ces extrémités axiales 120a, 120b et de secondes fentes 28a, 28b sur ces deux oreilles 5a, 5b. Ces ressorts à spirale 26a, 26b permettent un rappel automatique du premier clapet 12 dans sa seconde position de libération de la première ouverture 7 et, par conséquent, du second clapet 13 dans sa seconde position d'obturation du premier conduit 10. Les ralentisseurs à graisse 21a, 21b compensent la force exercée par les ressorts à spirale 26a, 26b, pour que le déplacement du premier clapet 12 vers sa seconde position se fasse lentement, sans choc. Cela limite également la vitesse de rabattement du premier clapet 12 vers sa première position d'obturation de la première ouverture 7.

En regard des figures 1 à 3, le dispositif d'introduction d'aliments 1 comprend un dispositif de maintien 29 qui comporte un loquet de verrouillage 30 actionné par une manette de commande 31, le loquet de verrouillage 30 permettant de maintenir le premier clapet 12 dans sa première position d'obturation de la première ouverture 7. Lorsque le dispositif de maintien 29 est désactivé, les ressorts à spirale 26a, 26b assurent le retour automatique du premier clapet 12 dans sa seconde position de libération de la première ouverture 7. Ainsi les ressorts à spirale 26a, 26b forment un dispositif de rappel ramenant le premier clapet 12 dans sa seconde position de libération de la première ouverture 7, lorsque le dispositif de maintien 29 est désactivé.

En regard des figures 1, 2 et 8, le premier clapet 12 comprend deux bras latéraux 32a, 32b ayant une forme arquée, dont les extrémités inférieures 33a, 33b viennent en butée contre les côtés latéraux 34a, 34b du capot 6 lorsque le premier clapet 12 atteint sa seconde position de libération de la première ouverture, ce qui limite le pivotement du premier clapet 12 dans cette seconde position sous l'effet des ressorts à spirale 26a, 26b.

En regard des figures 1, 3, 5 et 6, le second clapet 13 comprend une encoche 35 au travers de laquelle peuvent passer certains aliments ou morceaux d'aliments dont la section est inférieure à celle de l'encoche 35, par exemple des carottes ou des petites tomates, en passant par la première ouverture 7. Lorsque le second clapet 13 est dans sa première position de libération du premier conduit 10, l'encoche 35 dudit second clapet 13 se situe dans le passage du second conduit 11. Dans cette première position du second clapet 13, un poussoir 36 (illustré en pointillés en figure 3) peut être inséré par la seconde ouverture 8 puis dans l'encoche 35, pour pousser jusque dans l'enceinte de travail 105 de l'appareil 100 les aliments se trouvant à proximité de la première extrémité inférieure 10b du premier conduit 10.

Lors de l'utilisation de l'appareil 100 pour le pressage de fruits et/ou légumes, l'utilisateur actionne la manette de commande 31, ce qui libère le premier clapet 12 et permet le pivotement du premier clapet 12 jusqu'à ce que le premier clapet 12 vienne en butée dans sa seconde position où la première ouverture 7 est libérée, tandis que le second clapet 13 obture partiellement (du fait de la présence de l'encoche 35) la première extrémité supérieure 10a du premier conduit 10. L'utilisateur peut insérer des fruits et/ou aliments qui, selon leur grosseur, passent par l'encoche 35 ou reposent sur le second clapet 13 se trouvant dans sa seconde position. Dans ce cas où les fruits et/ou légumes reposent sur le second clapet 13, l'utilisateur pivote le premier clapet 12 dans sa première position d'obturation de la première ouverture 7, les dispositifs de transmission 14a, 14b permettant alors un pivotement plus rapide et plus important du second clapet 13 pour libérer plus rapidement le premier conduit 10 et assurer la descente desdits fruits et/ou légumes dans ce premier conduit 10, avant même l'obturation de la première ouverture 7 par le premier clapet 12. Les fruits et/ou légumes atteignent alors l'enceinte de travail 105 où ils sont pressés par l'outil rotatif 102. En cas de bourrage dans le premier conduit 10, l'utilisateur peut introduire le poussoir 36 par la seconde ouverture 8 et au travers de l'encoche 35 du second clapet 13 disposé dans sa première position, afin de pousser lesdits fruits et/ou légumes vers l'enceinte de travail 105.

Des variantes sont envisageables dans le cadre de l'invention. La première ouverture 7 n'est pas nécessairement horizontale. La première position d'obturation de la première ouverture 7 par le premier clapet 12 n'est pas nécessairement horizontale. La seconde position d'obturation au moins partielle de la première ouverture 7 par le second clapet 13 n'est pas nécessairement horizontale. Les dispositifs de transmission 14a, 14b peuvent par exemple comporter un nombre impair de pignons intermédiaires différent d'un seul pignon, entre le premier secteur de roue dentée 19a, 19b assujetti au premier clapet 12 et le second secteur de roue dentée 20a, 20b assujetti au second clapet 13, tout en permettant d'amplifier le pivotement du second clapet 13 lors du pivotement du premier clapet 12. Le dispositif d'introduction d'aliments 1 peut comporter un seul des deux dispositifs de transmission 14a, 14b ; la présence des deux dispositifs de transmission 14a, 14b sera toutefois privilégiée pour une bonne répartition des efforts entre le premier clapet 12 et le second clapet 13. Au moins l'un des premiers secteurs de roue dentée 19a, 19b peut appartenir à une roue dentée. Au moins l'un des seconds secteurs de roue dentée 20a, 20b peut ne pas appartenir à une roue dentée. L'utilisation d'un seul premier secteur de roue dentée et/ou d'un seul second secteur de roue dentée peut être envisagée. Le dispositif de rappel peut comporter au moins un élément de rappel élastique, cet élément de rappel élastique n'étant pas nécessairement un ressort à spirale. L'appareil 100 pourrait être d'un autre type, par exemple un hachoir, sur le même principe de fonctionnement que celui décrit précédemment.

La présente invention n'est nullement limitée aux exemples de réalisation décrits et à leurs variantes, mais englobe de nombreuses modifications dans le cadre des revendications.

## Revendications

1. Dispositif d'introduction d'aliments (1) pour appareil (100) de préparation culinaire, ledit appareil (100) comprenant une enceinte de travail (105) dans laquelle est logé un outil rotatif (102), le dispositif d'introduction d'aliments (1) comprenant :
- une goulotte (4) d'introduction d'aliments comprenant une première ouverture (7) permettant d'introduire les aliments et un premier conduit (10) débouchant à une première extrémité supérieure (10a) sur la première ouverture (7) et à une première extrémité inférieure (10b) sur l'enceinte de travail (105), pour acheminer lesdits aliments de la première ouverture (7) jusqu'à l'enceinte de travail (105),
- un premier clapet (12) monté à pivotement selon un premier axe de pivotement (X2) entre une première position d'obturation de la première ouverture (7) et une seconde position de libération de la première ouverture (7),
- un second clapet (13) monté à pivotement selon un second axe de pivotement (X3) entre une première position de libération du premier conduit (10) et une seconde position d'obturation au moins partielle du premier conduit (10),
**caractérisé en ce que** le dispositif d'introduction d'aliments (1) comprend au moins un dispositif de transmission (14a, 14b) agencé entre le premier clapet (12) et le second clapet (13) et configuré pour que le pivotement du premier clapet (12) de sa première position vers sa seconde position, et inversement, entraîne le pivotement du second clapet (13) de sa première position vers sa seconde position, et inversement, avec un différentiel de mouvement permettant d'amplifier le pivotement du second clapet (13) sous l'effet du pivotement du premier clapet (12).

2. Dispositif d'introduction d'aliments (1) selon la revendication 1, **caractérisé en ce que** le dispositif de transmission (14a, 14b) comprend au moins un premier secteur de roue dentée (19a, 19b) monté rotatif selon le premier axe de pivotement (X2) et assujetti au premier clapet (12), un pignon intermédiaire (25a, 25b) monté rotatif selon un troisième axe de rotation (X4) et au moins un second secteur de roue dentée (20a, 20b) monté rotatif selon le second axe de pivotement (X3) et assujetti au second clapet (13), le pignon intermédiaire (25a, 25b) engrenant avec le premier secteur de roue dentée (19a, 19b) et avec le second secteur de roue dentée (20a, 20b).

3. Dispositif d'introduction d'aliments (1) selon la revendication 2, **caractérisé en ce que** l'au moins un premier secteur de roue dentée (19a, 19b) présente un rayon supérieur à celui de l'au moins un second secteur de roue dentée (20a, 20b).

4. Dispositif d'introduction d'aliments (1) selon l'une quelconques des revendications 1 à 3, **caractérisé en ce que** le dispositif de transmission (14a, 14b) comprend un mécanisme ralentisseur (21a, 21b) permettant de freiner le pivotement du premier clapet (12) et du second clapet (13).

5. Dispositif d'introduction d'aliments (1) selon la revendication 4 rattachée à l'une quelconque des revendications 2 ou 3, **caractérisé en ce que** le mécanisme ralentisseur (21a, 21b) est un ralentisseur à graisse agencé sur le pignon intermédiaire (25a, 25b).

6. Dispositif d'introduction d'aliments (1) selon l'une quelconque des revendications 1 à 5, **caractérisé en ce que** le premier clapet (12) pivote d'un angle de l'ordre de 90° entre sa première position et sa seconde position et le second clapet (13) pivote d'un angle de l'ordre de 120° entre sa première position et sa seconde position.

7. Dispositif d'introduction d'aliments (1) selon l'une quelconque des revendications 1 à 6, **caractérisé en ce que** la première ouverture (7) et le premier conduit (10) sont dimensionnés pour que le second clapet (13) libère un passage du premier conduit (10) d'une section correspondant à au moins 90% de la section de la première ouverture (7), de préférence 100%, lorsque le premier clapet (12) obture ladite première ouverture (7).

8. Dispositif d'introduction d'aliments (1) selon l'une quelconque des revendications 1 à 7, **caractérisé en ce que** la goulotte (4) comprend une seconde ouverture (8) de plus petite dimension que la première ouverture (7) et un second conduit (11) rectiligne débouchant à une seconde extrémité supérieure (11a) sur la seconde ouverture (8) et à une seconde extrémité inférieure (11b) à proximité de la première extrémité inférieure (10b) du premier conduit (10).

9. Dispositif d'introduction d'aliments (1) selon la revendication 8, **caractérisé en ce que** le second clapet (13) obture au moins partiellement le second conduit (11) dans sa première position et libère le second conduit (11) dans sa seconde position.

10. Dispositif d'introduction d'aliments (1) selon la revendication 9, **caractérisé en ce que** le second clapet (13) comporte une encoche (35) permettant l'insertion d'un poussoir (36) au travers dudit second clapet (13) dans sa première position, en insérant ledit poussoir (36) par la seconde ouverture (8).

11. Dispositif d'introduction d'aliments (1) selon l'une quelconque des revendications 1 à 10, **caractérisé en ce qu'**il comprend un corps (2) incorporant le premier conduit (10) et un capot (6) fermant une extrémité supérieure (2c) dudit corps (2), le capot (6) comportant la première ouverture (7).

12. Dispositif d'introduction d'aliments (1) selon la revendication 11 rattachée à l'une quelconque des revendications 8 ou 9, **caractérisé en ce que** le corps (2) incorpore le second conduit (11) et le capot (6) comporte la seconde ouverture (8).

13. Dispositif d'introduction d'aliments (1) selon l'une quelconque des revendications 11 ou 12, **caractérisé en ce que** le premier clapet (12), le second clapet (13) et l'au moins un dispositif de transmission (14a, 14b) sont portés par le corps (2), au niveau de sa jonction avec le capot (6), ledit capot (6) permettant de maintenir montés à pivotement le premier clapet (12) et le second clapet (13) sur ledit corps (2).

14. Dispositif d'introduction d'aliments (1) selon l'une quelconque des revendications 1 à 13, **caractérisé en ce qu'**il comprend un dispositif de maintien (29) du premier clapet (12) dans sa première position.

15. Dispositif d'introduction d'aliments (1) selon la revendication 14, **caractérisé en ce qu'**il comprend un dispositif de rappel du premier clapet (12) dans sa seconde position, lorsque le dispositif de maintien (29) est désactivé.

16. Dispositif d'introduction d'aliments (1) selon l'une quelconque des revendications 1 à 15, **caractérisé en ce qu'**il comprend un dispositif de butée limitant le pivotement du premier clapet (12) dans sa seconde position.

17. Appareil (100) de préparation culinaire comprenant un réceptacle (101), un outil rotatif (102) agencé dans le réceptacle (101) et un dispositif d'introduction d'aliments (1) comportant un couvercle (3) prévu pour fermer le réceptacle (101), **caractérisé en ce que** le dispositif d'introduction d'aliments (1) est conforme à l'une au moins des revendications 1 à 16.

18. Appareil (100) selon la revendication 17, dans lequel l'outil rotatif (102) est une vis de pressage permettant d'extraire du jus des aliments.
